# EUROPEAN PATENT SPECIFICATION

(11) **EP 1 509 414 B1**
(45) Date of publication and mention of the grant of the patent: **06.02.2008**
(21) Application number: 03756328.5
(22) Date of filing: 02.06.2003
(51) Int. Cl.: B60G 7/00

(54) **HYDROFORMED CONTROL ARM**
INNENHOCHDRUCKGEFORMTER STEUERARM
BRAS DE COMMANDE HYDROFORME

(30) Priority: 31.05.2002 US 384169 P
(43) Date of publication of application: 02.03.2005
(73) Proprietor: MAGNA INTERNATIONAL INC, Aurora, Ontario L4G 7K1 (CA)
(72) Inventor: KAMINSKI, Robert, M., Clarkston, MI 48346 (US); GABBIANELLI, Gianfranco, Troy, MI 48084 (US)
(74) Representative: Hössle Kudlek & Partner
(86) International application number: PCT/US2003/017217
(87) International publication number: WO 2003/101767

(56) References cited:
- DE-A- 10 007 193
- DE-A- 19 843 825
- US-A- 6 158 772

## Description

The present application claims priority to U.S. Provisional Patent Application No. 60/384,169, filed May 31, 2002.

### Field of the Invention

The present invention relates to motor vehicle manufacturing. More specifically, illustrative embodiments of the present invention relate to automobile control arms, which incorporate hydroformed members, and to methods for making the same.

### Background

Control arms are used in motor vehicles to assist with supporting and controlling the respective wheels of the motor vehicle. Typically, control arms can be found connected between the frame of the motor vehicle and a wheel assembly. Control arm construction as described in DE 100 07 193 A1 is generally complicated for a number of reasons including, for example, the number and the nature of the connections between the control arm and other vehicle components and also because of the performance demands and stresses placed on control arms.

### Summary

The present invention can be embodied in a control arm for an automobile comprising a hydroformed tubular member having a first end forming part of a first joint and a second end, the hydroformed tubular member being generally arcuate in a longitudinal direction and being defined by an outwardly deformed tubular metallic wall fixed into a predetermined exterior surface configuration corresponding to the internal surfaces of a die cavity, a first stamped member forming part of a second joint and coupled to the hydroformed tubular member between the first end and the second end of the hydroformed tubular member, the first stamped member having a first section rigidly connected to the hydroformed tubular member and a second section adapted to receive a first bushing, and a second stamped member forming part of a third joint and coupled to the second end nf the hydroformed tubular member, the second stamped member having a first portion rigidly connected to the second end of the hydroformed tubular member and a second portion adapted to receive a second bushing.

The present invention may also be embodied in a method of forming a control arm for a motor vehicle comprising forming a hydroformed tubular member by a method comprising providing a tubular metallic blank having first and second ends and being generally arcuate in a longitudinal direction and having a tubular metallic wall, placing the blank into a die cavity of a die assembly, the die cavity having die surfaces, and providing a high pressure fluid into an interior of the blank to expand the metallic wall of the blank outwardly into conformity with the surfaces of the die cavity to conform the blank into its final, arcuate configuration, with the first end of the hydroformed member be adapted to be part of a first joint, forming a first stamped member to be part of a second joint, forming a second stamped member to be part of a third joint, rigidly coupling the first stamped member to the hydroformed tubular member between the first end and the second end of the hydroformed tubular member, the first stamped member having a first section rigidly connected to the hydroformed tubular member and a second section adapted to receive a first bushing, and rigidly coupling the second stamped member to the second end of the hydro formed tubular member, the second stamped member having a first portion rigidly connected to the second end of the hydroformed tubular member and a second portion adapted to receive a second bushing.

Other aspects, features, and advantages of the present invention will become apparent from the following detailed description of the illustrated embodiments, the accompanying drawings, and the appended claims.

### Brief Description of the Drawings

FIG. 1 is a perspective view of a control arm constructed in accordance with one illustrative embodiment of the present invention, the control arm shown mounted on a motor vehicle frame and operatively connected to other vehicle components;

FIG. 2 is another perspective view illustrating the control arm of FIG. 1;

FIG. 3 is a perspective view of the control arm of FIG. 1 in isolation;

FIG. 4 is an exploded view of the illustrative control arm of FIG. 1;

FIG. 5 is a cross-sectional view of the control arm taken through the line 5-5 of FIG. 3;

FIG. 6 is a cross-sectional view of the control arm taken through the line 6-6 of FIG. 3; and

FIG. 7 is a cross-sectional view of the control arm taken through the line 7-7 of FIG. 3, but illustrated without the bushing.

### Detailed Description of Illustrated Embodiments

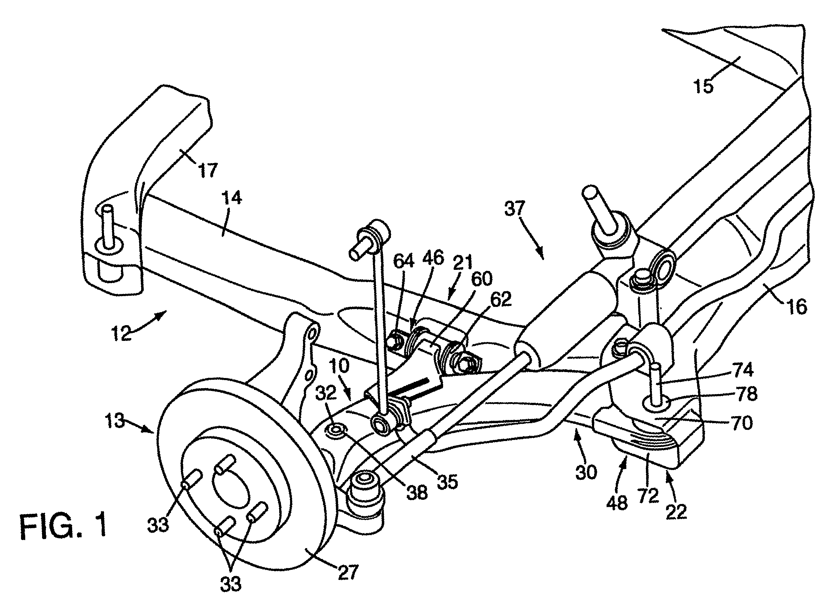

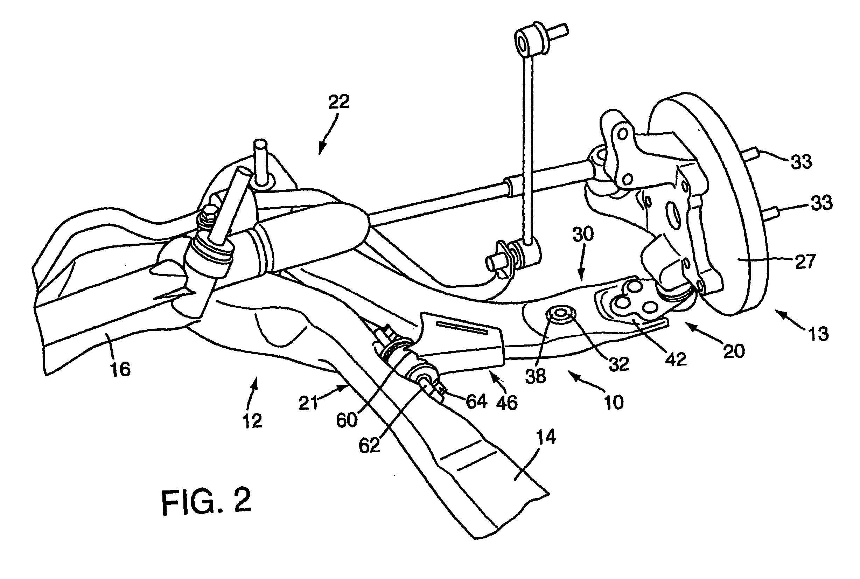

The present invention is generally directed to automobile control arms and to apparatuses and methods for constructing the same. FIGS. 1 and 2 show views of an illustrative embodiment of a control arm 10 constructed according to the principles of the present invention mounted on an example motor vehicle frame 12. The frame 12 (only portions of which are shown in FIGS. 1 and 2) includes a pair of side rails 14, 15, a front cross rail 16, and a rear cross rail 17 connected therebetween. The rails 14-17 may each be of tubular hydroformed construction and the frame 12 may be of the type disclosed and described in commonly assigned U.S. patent application serial number 10/091,600, titled Frame Assembly for a Motor Vehicle and Protective Member Therefor. The frame 12 may be mounted generally in the front portion of an assembled motor vehicle (not shown) and may provide points of attachment and structural support for the engine and other vehicle components and structures.

A pair of control arms are mounted on opposite sides of the frame 12. Only one control arm 10 is shown and discussed, but the control arm mounted on the opposite side of the frame 12 may function identically and may be of mirror image construction to the control arm 10. The control arm 10 provides wheel support to facilitate the mounting and support of a steerable front wheel (not shown) and its corresponding wheel support structure 13. The wheel support structure 13 includes a brake rotor 27 and a central hub portion 31 with a plurality of threaded fasteners 33 to receive a rim of the wheel. A steering arm 35 of a steering assembly 37 (only a portion of which is illustrated) may be operatively connected to the wheel support structure 13.

The control arm 10 couples a front wheel of the vehicle to the frame 12. The control arm 10 is coupled to the vehicle wheel support structure 13 at joint 20 and is coupled to the frame 12 at a pair of joints 21, 22. As considered below, the joint 20 includes a socket assembly 24 having a steering knuckle and a ball joint. The joints 21, 22 may each include respective bushings 26, 28. The bushing 28 may be constructed of rubber or other flexible material and be constructed similar to known bushings that are used in connection with control arms. A control arm 10 constructed according to the principles of the present invention provides vehicle manufactures with many advantages, including, for example, high strength, light weight, low cost, and an efficient and low cost way of integrating a rubber bushing such as bushing 28 into the control arm 10. Although the attached drawings illustrate one way of forming and attaching control arm 10, it should be understood that a control arm consistent with the present invention can take a variety of shapes and sizes and can be implemented in a variety of configurations, including as an alternative to known control arms. Examples of known control arms are disclosed in U.S. Patent Nos. 6,070,445 to Holierhock; and 6,098,437 to Kocer et al..

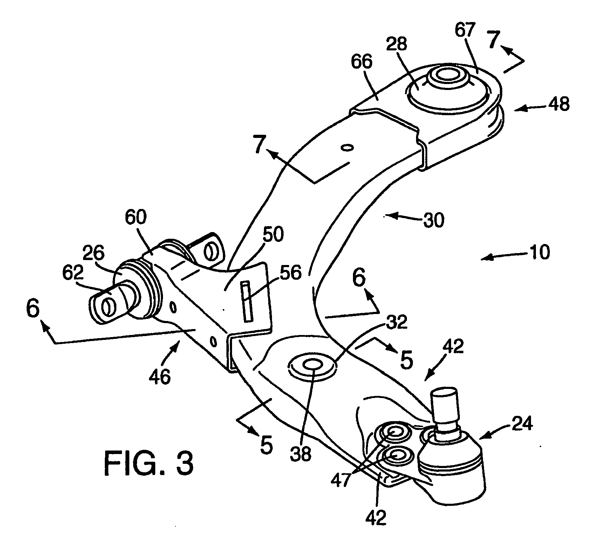

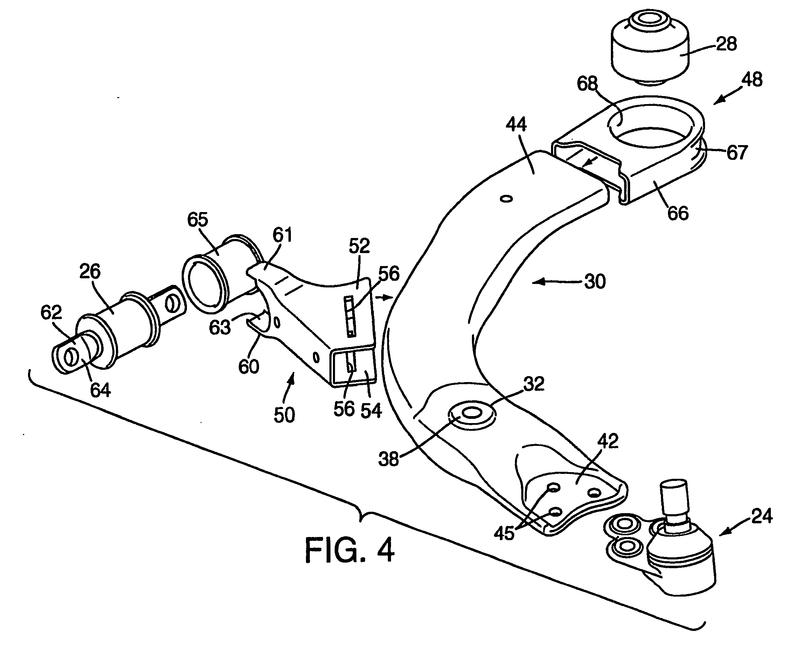

FIGS. 3 and 4 show the control arm 10 in isolation. The control arm 10 includes a hydroformed tubular member 30. Generally, tubular hydroformed members such as member 30 are formed by placing a tubular metallic blank into the cavity of a hydroforming die assembly and providing a fluid under pressure into an interior of the blank. A hydroforming fluid which may be under high pressure is injected into each end of the blank. The fluid expands the tubular metallic wall of the blank outwardly into conformity with die surfaces of the die cavity so that the blank permanently assumes a new shape determined by the shape of the die cavity to form the hydroformed member 30. The metallic wall of blank may be made of a high strength steel or other metallic material of suitable strength and properties. The blank may have a uniform circular cross-section prior to hydroforming and may optionally be bent or shaped in its longitudinal direction prior to hydroforming so that the blank is shaped to fit in the hydroforming die. For example, all or a portion of the blank may be generally arcuate or angled in a longitudinal direction prior to hydroforming so that the blank is configured to fit within a die cavity that has die surfaces defining an arcuate configuration. In this instance, expanding or deforming the metallic wall of the blank outwardly into conformity with the surfaces of the die cavity conforms the blank into its final, arcuate configuration. The hydroformed member may have a non-uniform and non-circular cross-section. The details of tubular hydroforming are disclosed, for example, in commonly assigned U.S. Patent No. 6,092,865 to Jaekel et al..

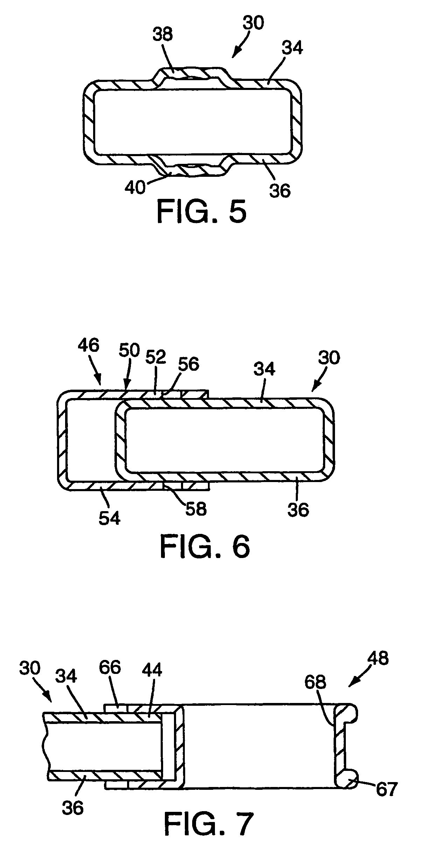

The hydroformed member 30 is generally arcuate in a longitudinal direction and is defined by an outwardly deformed tubular metallic wall fixed into a predetermined exterior surface configuration corresponding to the internal surfaces of a die cavity. The member 30 may be shaped during hydroforming to include integral wall portions that form a fuse 32. The fuse 32 is a section of the member 30 that is designed to provide a point of controlled deformation and/or breakage of the control arm 10 in the event of a vehicle accident. For example, if the associated wheel collides with an obstruction during a vehicle accident, the control arm 10 may be designed to deform and/or break at the fuse 32 prior to any deformation of the frame 12 and thereby preserve the structural integrity of the frame 12 of the vehicle during the accident. As seen in FIGS. 3 and 6, upper and lower wall portions 34, 36, respectively, of the fuse portion 32 of the member 30 are shaped to form respective upper and lower circular bulges 38, 40. The area of the transverse cross-section of the control arm 10 is illustrated as being greater in the area of the fuse 32 than in the rest of the control arm 10.

As seen in FIG. 2, the hydroformed member 30 is shaped to have a generally flattened first end 42 and an open tubular second end 44. The first end 42 may be generally flattened by moving opposing walls 34, 36 of the hydroformed member 30 toward on another until the walls 34, 36 are in contact with one another or, alternatively, until the walls 34, 36 are relatively close to one another but spaced from one another (relative to the positions of the opposing walls 34, 36 after hydroforming). The flattening of the end 42 may occur after hydroforming while the member 30 is still in the hydroforming die or in a separate apparatus after the hydroformed member 30 is removed from the hydroforming die. A plurality of holes 45 are formed completely through both walls 34, 36 of the first end 42 of the hydroformed member 12 in the generally flattened area so that the end 42 can be attached to socket assembly 24.

The holes 47 in the first end 42 are used in forming joint 20 so that the first end 42 of the hydroformed member 30 forms part of the joint 20. That is, the socket assembly 24 is mounted to the first end 42 of the hydroformed member 30 and is mounted to the support structure 13 for the wheel. The socket assembly 24 may be mounted to the first end 42 of the hydroformed member 30 by, for example, fasteners, such as rivets 47 or bolts.

As seen in FIGS. 1 and 2, the joints 21 and 22 are formed using a pair of members 46, 48 that are mounted on the hydroformed member 30. As best seen in FIGS. 3, 4, 6, and 7, each member 46, 48 may be constructed of a metallic material that is shaped by stamping as shown in the illustrative embodiment of the control arm 10 or by other appropriate method. When each member 46, 48 is of stamped construction, a relatively mild steel may be used to construct each member 46, 48.

As seen in FIGS. 3, 4, and 6, the first stamped member 46 includes a first section 50 that provides a pair of opposing walls 52, 54 spaced to receive a portion of the hydroformed member 30 therebetween. The first stamped member 46 is coupled to an intermediate portion of the hydroformed member 30 between the first end 42 and second end 44 thereof by rigidly coupling the walls 52, 54 to exterior surfaces of the hydroformed member 30 (see FIG. 7, for example) by welding or other appropriate method. Each wall 52, 54 may include a weld opening 56, 58 to receive a welding material therein. A second section 60 of the first stamped member 46 provides structure in the form of a pair of outwardly extending wall portions 61, 63 and a cylindrical collar 65 that is adapted to receive the bushing 26. The collar 65 may be constructed of a metal material or of another appropriate material. The collar 65 may be welded to the wall portions 61, 63 of the first stamped member 46 or secured thereto by any other appropriate method. A rod 62 and the bushing 26 are disposed within the interior of the collar 65. The first stamped member 46 may be movably connected to the frame 12 to form the joint 21 by rigidly coupling each end of the rod 62 to the frame 12 utilizing, for example, bolts 64, as seen in FIG. 1.

The second stamped member 48 forms part of the joint 22 and is rigidly coupled to the second end 44 of the hydroformed member 30. As seen in FIGS. 3, 4 and 7, the second stamped member 48 may be shaped to provide a first portion 66 that forms an open end sized to receive the second end 44 of the hydroformed member 30 therein and a second portion 67 that forms a circular opening 68 adapted to receive the second bushing 28 therein. The second end 44 of the hydroformed member 30 can be rigidly coupled in the open end of the first portion 66 of the second stamped member 48 by welding or any other appropriate method.

Alternatively, the hydroformed member 30 could be constructed to provide the opening for the bushing 28. However, the use of the separate second stamped member 48 to provide the opening 68 may be advantageous for several reasons. For example, the use of a separate second stamped member 48 allows the second member 48 to be shaped in a single step process or a multi-step process without the need to handle the hydroformed member 30 during this processing. The second stamped member 48 can be shaped utilizing, for example, a conventional progressive stamping die operation, or, alternatively, off-line in a secondary operation. The inner dimensions of the opening 68 can be controlled to a high tolerance in these types of operations. Another advantage of the two-piece construction is that the two pieces 30, 48 can be constructed so that area of the welded connection between the pieces 30, 48 can be spaced far enough from the opening 68 so that spattering of the weld material into the opening 68 can be minimized. Weld-spatter in the area of the opening 68 may affect, among other things, the close tolerance of the opening 68 for receiving the bushing 28.

As seen in FIGS. 1 and 2, the control arm 10 is coupled to the frame 12 to form the joint 22 by placing the second stamped member 48 and the bushing 28 in the opening 68 between upper and lower wall portions 70, 72 of the front cross rail 16. A rod or rod-like structure 74 is placed through openings in the wall portions 70, 72 and through a central opening in the bushing 28. A sleeve 78 may be mounted around the rod 76. It can be appreciated that joints 21 and 22 cooperate to allow a degree of movement of the control arm 10 with respect to the frame 12 and the joint 20 permits a degree of movement of the support structure 13 with respect to the control arm 10.

The hydroformed member 30 provides the control arm 10 with a high degree of structural strength. The tubular construction and the hydroformed construction of the hydroformed member 30 allows the control arm 10 to have a low weight relative to a comparable control arm constructed entirely of stamped and welded pieces. Also, the use of separate members 46, 48 to form the joints 21, 22 enables a manufacturer to use identical hydroformed members in different vehicle designs. That is, the configuration of the stamped members 46, 48 can be changed to change the configuration of the joints between the hydroformed member 30 and a vehicle frame.

Thus, while the invention has been disclosed and described with reference with a limited number of embodiments, it will be apparent that variations and modifications may be made thereto without departure from the scope of the invention and various other modifications may occur to those skilled in the art. Therefore, the following claims are intended to cover modifications, variations, and equivalents thereof.

## Claims

1. A control arm (10) for an automobile, comprising a hydroformed tubular member (30) having a first end forming part of a first joint and a second end, said hydroformed tubular member being generally arcuate in a longitudinal direction and being defined by an outwardly deformed tubular metallic wall fixed into a predetermined exterior surface configuration corresponding to the internal surfaces of a die cavity; a first stamped member (46) forming part of a second joint and coupled to said hydroformed tubular member (30) between said first end (42) and said second end of (44) said hydroformed tubular member (30), said first stamped member (46) having a first section rigidly connected to said hydroformed tubular member and a second section (60) adapted to receive a first bushing; and a second stamped member (48) forming part of a third joint and coupled to said second end (44) of said hydroformed tubular member (30), said second stamped member (48) having a first portion (66) rigidly connected to said second end of said hydroformed tubular member and a second portion (67) adapted to receive a second bushing.

2. A method of forming control arm (10) for a motor vehicle, comprising forming a hydroformed tubular member by a method comprising,
providing a tubular metallic blank having first and second ends and being generally arcuate in a longitudinal direction and having a tubular metallic wall; placing the blank into a die cavity of a die assembly, the die cavity having die surfaces, and providing a high pressure fluid into an interior of the blank to expand the metallic wall of the blank outwardly into conformity with the surfaces of the die cavity to conform the blank into its final, arcuate configuration, with the first end of the hydroformed member be adapted to be part of a first joint;
forming a first stamped member to be part of a second joint; forming a second stamped member to be part of a third joint; rigidly coupling the first stamped member to the hydroformed tubular member between the first end and the second end of the hydroformed tubular member, the first stamped member having a first section rigidly connected to the hydroformed tubular member and a second section adapted to receive a first bushing, and rigidly coupling the second stamped member to the second end of the hydroformed tubular member, the second stamped member having a first portion rigidly connected to the second end of the hydroformed tubular member and a second portion adapted to receive a second bushing.

3. A ground-contacting element supporting assembly (10, 12, 13) for a motor vehicle, comprising:
a frame member (12) of the motor vehicle;
a ground-contacting element (13) support joint; and
a control arm (10) extending between said frame member and said support joint, said control arm (10) having a first end (42) connected to said support joint and a second end (44) connected to said frame member, said second end of said control arm being formed by a first bushing holding member (48) having an opening forming a first collar to support a first bushing positioned within said first collar, said control arm also having an arcuate, hydroformed tubular member (30) extending between said first end and said first bushing holding member (46), said hydroformed tubular member being attached to said first bushing holding member, and said first collar being spaced from said hydroformed member such that a portion of said first bushing holding member is positioned between said hydroformed member and said first collar.

4. An assembly in accordance with claim 3, wherein
said frame member is attached to an automobile frame that includes interconnected longitudinal and transverse frame members.

5. An assembly in accordance with claim 3, wherein
said ground-contacting element support joint is a socket that supports a wheel support structure.

6. An assembly in accordance with claim 5, wherein
said socket is rigidly secured to said hydroformed tubular member.

7. An assembly in accordance with claim 5, wherein
said socket is rigidly secured to said hydroformed tubular member by bolts.

8. An assembly in accordance with claim 3, wherein
said first bushing holding member is a hollow, stamped member that is connected to said hydroformed tubular member by a telescopic connection.

9. An assembly in accordance with claim 8. wherein
said first bushing holding member is secured to said hydroformed tubular member by a first weld.

10. An assembly in accordance with claim 3, wherein
said hydroformed tubular member includes a mechanical fuse having a wall section that is thinner than wall sections of said hydroformed tubular member that are adjacent to said mechanical fuse.

11. An assembly in accordance with claim 3, further comprising:
a second bushing holding member having a second collar with a second bushing positioned within said second collar, said second bushing holding member being attached to said hydroformed tubular member between said first and second ends of said control arm.

12. An assembly in accordance with claim 11. wherein
said second holding member is a hollow, stamped member having an aperture formed between two flanges and said hydroformed tubular member being positioned within said aperture between said two flanges.

13. An assembly in accordance with claim 12, wherein
said second bushing holding member is secured to said hydroformed tubular member by a second weld.

14. A method for forming a control arm (10) for a motor vehicle, comprising:
forming a hydroformed tubular member by a method comprising,
providing a tubular metallic blank having a tubular metallic wall;
placing the tubular metallic blank into a die cavity of a die assembly, the die cavity having die surfaces, and
providing a high pressure fluid into an interior of the blank to expand the metallic wall of the blank outwardly into conformity with the surfaces of the die cavity;
forming a first bushing holding member, including by a method comprising stamping a metallic sheet material, the first bushing holding member including an opening forming a first collar;
connecting the hydroformed tubular member and the first bushing holding member so that the first collar is spaced from the hydroformed tubular member such that a portion of the first bushing holding member is positioned between the hydroformed member and the first collar; and
inserting a bushing within the first collar.

15. A method in accordance with claim 14, wherein
the hydroformed tubular member and the first bushing holding member are connected by inserting the hydroformed tubular member within the first bushing holding member in a telescoping manner.

16. A method in accordance with claim 14, wherein
the hydroformed tubular member and the first bushing holding member are connected by welding.

17. A method in accordance with claim 14, further comprising:
forming a second bushing holding member, including by a method comprising stamping a metallic sheet material;
attaching a second collar to the second bushing holding member,
inserting a second bushing within the second collar,
attaching the second bushing holding member to the hydroformed tubular member at a position between the first bushing holding member and an end of the hydroformed tubular member opposite the first bushing holding member.

18. A method in accordance with claim 17, wherein
the second bushing holding member is secured to the hydroformed tubular member by welding.

## Patentansprüche

1. Lenkerarm (10) für ein Kraftfahrzeug, mit einem hydrogeformten röhrenförmigen Element (30) mit einem ersten Ende, das einen Teil eines ersten Gelenks bildet, und einem zweiten Ende, wobei das hydrogeformte röhrenförmige Element in einer Längsrichtung im allgemeinen gekrümmt ist und durch eine nach außen verformte röhrenförmige metallische Wand definiert ist, die in einer vorgegebenen Außenflächenkonfiguration, die den Innenflächen eines Formungshohlraums entspricht, fixiert ist; einem ersten gestanzten Element (46), das einen Teil eines zweiten Gelenks bildet und mit dem hydrogeformten röhrenförmigen Element (30) zwischen dem ersten Ende (42) und dem zweiten Ende (44) des hydrogeformten röhrenförmigen Elements (30) verbunden ist, wobei das erste gestanzte Element (46) einen mit dem hydrogeformten röhrenförmigen Element starr verbundenen ersten Abschnitt und einen zweiten Abschnitt (60), der dazu ausgelegt ist, eine erste Buchse aufzunehmen, aufweist; und einem zweiten gestanzten Element (48), das einen Teil eines dritten Gelenks bildet und mit dem zweiten Ende (44) des hydrogeformten röhrenförmigen Element (30) verbunden ist, wobei das zweite gestanzte Element (48) einen ersten Abschnitt (66), der mit dem zweiten Ende des hydrogeformten röhrenförmigen Elements starr verbunden ist, und einen zweiten Abschnitt (67), der dazu ausgelegt ist, eine zweite Buchse aufzunehmen, aufweist.

2. Verfahren zum Formen eines Lenkerarms (10) für ein Kraftfahrzeug, das das Formen eines hydrogeformten röhrenförmigen Elements durch ein Verfahren mit den folgenden Schritten umfasst:
Bereitstelen eines röhrenförmigen metallischen Rohlings, der ein erstes und ein zweites Ende aufweist, in einer Längsrichtung im allgemeinen gekrümmt ist und eine röhrenförmige metallische Wand aufweist; Anordnen des Rohlings in einem Formungshohlraum einer Formungsanordnung, wobei der Formungshohlraum Formungsflächen aufweist, und Bereitstellen eines Hochdruckfluids in einem Innenraum des Rohlings, um die metallische Wand des Rohlings nach außen in eine Übereinstimmung mit den Flächen des Formungshohlraums auszudehnen, damit der Rohling in seine endgültige gekrümmte Konfiguration gebracht wird, wobei das erste Ende des hydrogeformten Elements so ausgelegt ist, dass es ein Teil eines ersten Gelenks ist;
Formen eines ersten gestanzten Elements als Teil eines zweiten Gelenks; Formen eines zweiten gestanzten Elements als Teil eines dritten Gelenks; starres Verbinden des ersten gestanzten Elements mit dem hydrogeformten röhrenförmigen Element zwischen dem ersten Ende und dem zweiten Ende des hydrogeformten röhrenförmigen Elements, wobei das erste gestanzte Element einen ersten Abschnitt, der mit dem hydrogeformten röhrenförmigen Element starr verbunden ist, und einen zweiten Abschnitt, der ausgelegt ist, um eine erste Buchse aufzunehmen, aufweist, und starres Verbinden des zweiten gestanzten Elements mit dem zweiten Ende des hydrogeformten röhrenförmigen Elements, wobei das zweite gestanzte Element einen ersten Abschnitt, der mit dem zweiten Ende des hydrogeformten röhrenförmigen Elements starr verbunden ist, und einen zweiten Abschnitt, der dazu ausgelegt ist, eine zweite Buchse aufzunehmen, aufweist.

3. Bodenkontaktelement-Traganordnung (10, 12, 13) für ein Kraftfahrzeug, mit:
einem Rahmenelement (12) des Kraftfahrzeugs,
einem Traggelenk für ein Bodenkontaktelement (13), und
einem Lenkerarm (10), der sich zwischen dem Rahmenelement und dem Traggelenk erstreckt, wobei der Lenkerarm (10) ein erstes Ende (42), das mit dem Traggelenk verbunden ist, und ein zweites Ende (44), das mit dem Rahmenelement verbunden ist, aufweist, wobei das zweite Ende des Lenkerarms durch ein erstes Hülsenhalteelement (48) gebildet ist, das eine Öffnung aufweist, die einen ersten Kranz bildet, um eine in dem ersten Kranz angeordnete erste Buchse zu tragen, wobei der Lenkerarm außerdem ein gekrümmtes, hydrogeformtes röhrenförmiges Element (30) aufweist, das sich zwischen dem ersten Ende und dem ersten Hülsenhalteelement (46) erstreckt, wobei das hydrogeformte röhrenförmige Element an dem ersten Hülsenhalteelement angebracht ist und wobei der erste Kranz von dem hydrogeformten Element beabstandet ist, so dass ein Abschnitt des ersten Hülsenhalteelements zwischen dem hydrogeformten Element und dem ersten Kranz positioniert ist.

4. Anordnung nach Anspruch 3, wobei das Rahmenelement an einem Kraftfahrzeugrahmen, der miteinander verbundene longitudinale und transversale Rahmenelement umfasst, befestigt ist.

5. Anordnung nach Anspruch 3, wobei das Traggelenk für ein Bodenkontaktelement eine Buchse ist, die eine Radträgerstruktur trägt.

6. Anordnung nach Anspruch 5, wobei die Buchse an dem hydrogeformten röhrenförmigen Element starr befestigt ist.

7. Anordnung nach Anspruch 5, wobei die Buchse an dem hydrogeformten röhrenförmigen Element durch Bolzen starr befestigt ist.

8. Anordnung nach Anspruch 3, wobei das erste Hülsenhalteelement ein hohles, gestanztes Element ist, das mit dem hydrogeformten röhrenförmigen Element durch eine Teleskopverbindung verbunden ist.

9. Anordnung nach Anspruch 8, wobei das erste Hülsenhalteelement an dem hydrogeformten röhrenförmigen Element durch eine erste Schweißung befestigt ist.

10. Anordnung nach Anspruch 3, wobei das hydrogeformte röhrenförmige Element eine mechanische Sicherung umfasst, die einen Wandabschnitt aufweist, der dünner ist als Wandabschnitte des hydrogeformten röhrenförmigen Elements, die an die mechanische Sicherung angrenzen.

11. Anordnung nach Anspruch 3, die des weiteren ein zweites Hülsenhalteelement umfasst, das einen zweiten Kranz aufweist, in dem eine zweite Hülse positioniert ist, wobei das zweite Hülsenhalteelement an dem hydrogeformten röhrenförmigen Element zwischen dem ersten und dem zweiten Ende des Lenkerarms angebracht ist.

12. Anordnung nach Anspruch 11, wobei das zweite Halteelement ein hohles, gestanztes Element ist, das eine zwischen zwei Flanschen gebildete Öffnung aufweist, wobei das hydrogeformte röhrenförmige Element in der Öffnung zwischen den zwei Flanschen positioniert ist.

13. Anordnung nach Anspruch 12, wobei das zweite Hülsenhalteelement an dem hydrogeformten röhrenförmigen Element durch eine zweite Schweißung befestigt ist.

14. Verfahren zum Formen eines Lenkerarms (10) für ein Kraftfahrzeug,mit:
Formen eines hydrogeformten röhrenförmiges Elements durch ein Verfahren mit den folgenden Schritten:
Bereitstellen eines röhrenförmigen metallischen Rohlings, der eine röhrenförmige metallische Wand aufweist,
Anordnen des röhrenförmigen metallischen Rohlings in einem Formungshohlraum einer Formungsanordnung, wobei der Formungshohlraum Formungsflächen aufweist, und
Bereitstellen eines Hochdruckfluids in einem Innenraum des Rohlings, um die metallische Wand des Rohlings nach außen in eine Übereinstimmung mit den Flächen des Formungshohlraums auszudehnen,
Formen eines ersten Hülsenhalteelements einschließlich gemäß einem Verfahren, das das Stanzen eines Metallblechmaterials umfasst, wobei das erste Hülsenhalteelement eine einen ersten Kranz bildende Öffnung aufweist,
Verbinden des hydrogeformten röhrenförmigen Elements und des ersten Hülsenhalteelements, so dass der erste Kranz von dem hydrogeformten röhrenförmigen Element beabstandet ist, derart dass ein Abschnitt des ersten Hülsenhalteelements zwischen dem hydrogeformten Element und dem ersten Kranz positioniert ist, und
Einsetzen einer Buchse in den ersten Kranz.

15. Verfahren nach Anspruch 14, wobei das hydrogeformte röhrenförmige Element und das erste Hülsenhalteelement durch Einsetzen des hydrogeformten röhrenförmigen Elements in das erste Hülsenhalteelement teleskopartig verbunden werden.

16. Verfahren nach Anspruch 14, wobei das hydrogeformte röhrenförmige Element und das erste Hülsenhalteelement durch Schweißen verbunden werden.

17. Verfahren nach Anspruch 14, das des weiteren folgende Schritte umfasst:
Formen eines zweiten Hülsenhalteelements einschließlich gemäß einem Verfahren, das das Stanzen eines Metallblechmaterials umfasst,
Befestigen eines zweiten Kranzes an dem zweiten Hülsenhalteelement,
Einsetzen einer zweiten Buchse in den zweiten Kranz und
Befestigen des zweiten Hülsenhalteelements an dem hydrogeformten röhrenförmigen Element an einer Position zwischen dem ersten Hülsenhalteelement und einem Ende des hydrogeformten röhrenförmigen Elements gegenüber dem ersten Hülsenhalteelement.

18. Verfahren nach Anspruch 17, wobei das zweite Hülsenhalteelement an dem hydrogeformten röhrenförmigen Element durch Schweißen befestigt ist.

## Revendications

1. Bras de commande (10) pour une automobile, comprenant un élément tubulaire hydroformé (30) ayant une première extrémité qui fait partie d'un premier joint et une seconde extrémité, ledit élément tubulaire hydroformé étant généralement arqué dans une direction longitudinale et étant défini par une paroi métallique tubulaire déformée vers l'extérieur fixée dans une configuration de surface extérieure prédéterminée correspondant aux surfaces internes d'une cavité de matrice ; un premier élément estampé (46) faisant partie d'un second joint et couplé audit élément tubulaire hydroformé (30) entre ladite première extrémité (42) et ladite seconde extrémité (44) dudit élément tubulaire hydroformé (30), ledit premier élément estampé (46) ayant un premier tronçon rigidement connecté audit élément tubulaire hydroformé et un second tronçon (60) adapté à recevoir une première douille ; et un second élément estampé (48) faisant partie d'un troisième joint et couplé à ladite seconde extrémité (44) dudit élément tubulaire hydroformé (30), ledit second élément estampé (48) ayant une première portion (66) rigidement connectée à ladite seconde extrémité dudit élément tubulaire hydroformé et une seconde portion (67) adaptée à recevoir une seconde douille.

2. Procédé pour former un bras de commande (10) pour un véhicule à moteur, comprenant de former un élément tubulaire hydroformé par un procédé comprenant:
la fourniture d'une ébauche métallique tubulaire ayant une première et une seconde extrémité et étant généralement arquée dans une direction longitudinale et ayant une paroi métallique tubulaire ; le placement de l'ébauche dans une cavité de matrice d'un ensemble de matrices, la cavité de matrice ayant des surfaces de matrice, et de l'application d'un fluide sous haute pression à l'intérieur de l'ébauche pour provoquer l'expansion de la paroi métallique de l'ébauche vers l'extérieur jusqu'en conformité avec les surfaces de la cavité de matrice pour conformer l'ébauche dans sa configuration finale arquée, la première extrémité de l'élément hydroformé étant adaptée à faire partie d'un premier joint;
la formation d'un premier élément estampé de manière à faire partie d'un second joint ; la formation d'un second élément estampé de manière à faire partie d'un troisième joint ; le couplage rigide du premier élément estampé à l'élément tubulaire hydroformé entre la première extrémité et la seconde extrémité de l'élément tubulaire hydroformé, le premier élément estampé ayant un premier tronçon rigidement connecté à l'élément tubulaire hydroformé et un second tronçon adapté à recevoir une première douille, et le couplage rigide du second élément estampé à la seconde extrémité de l'élément tubulaire hydroformé, le second élément estampé ayant une première portion rigidement connectée à la seconde extrémité de l'élément tubulaire hydroformé et une seconde portion adaptée à recevoir une seconde douille.

3. Ensemble formant support pour élément de contact au sol (10, 12, 13) pour un véhicule à moteur, comprenant:
un élément de châssis (12) du véhicule à moteur;
un joint de support pour élément de contact au sol (13); et
un bras de commande (10.) s'étendant entre ledit élément de châssis et ledit joint de support, ledit bras de commande (10) ayant une première extrémité (42) connectée audit joint de support et une seconde extrémité (44) connectée audit élément de châssis, ladite seconde extrémité dudit bras de commande étant formée par un premier élément de maintien de douille (48) ayant une ouverture formant un premier collier pour supporter une première douille positionnée à l'intérieur dudit premier collier, ledit bras de commande ayant également un élément tubulaire hydroformé arqué (30) s'étendant entre ladite première extrémité et ledit premier élément de maintien de douille (46), ledit élément tubulaire hydroformé étant attaché audit premier élément de maintien de douille, et ledit premier collier étant espacé dudit élément hydroformé de telle façon qu'une portion dudit élément de maintien de douille est positionnée entre ledit élément hydroformé et ledit premier collier.

4. Ensemble selon la revendication 3, dans lequel:
ledit élément de châssis est attaché à un châssis d'automobile qui inclut des éléments de châssis longitudinaux et transversaux interconnectés.

5. Ensemble selon la revendication 3, dans lequel:
ledit joint de support pour élément de contact au sol est un socle qui supporte une structure de support de roue.

6. Ensemble selon la revendication 5, dans lequel:
ledit socle est rigidement attaché audit élément tubulaire hydroformé.

7. Ensemble selon la revendication 5, dans lequel:
ledit socle est rigidement attaché audit élément tubulaire hydroformé par des boulons.

8. Ensemble selon la revendication 3, dans lequel:
ledit premier élément de support de douille est un élément estampé creux qui est connecté audit élément tubulaire hydroformé par une connexion télescopique.

9. Ensemble selon la revendication 8, dans lequel:
ledit premier élément de maintien de douille est attaché audit élément tubulaire hydroformé par une première soudure.

10. Ensemble selon la revendication 3, dans lequel:
ledit élément tubulaire hydroformé inclut un fusible mécanique ayant une section de paroi qui est plus mince que des sections de paroi dudit élément tubulaire hydroformé qui sont adjacentes audit fusible mécanique.

11. Ensemble selon la revendication 3, comprenant en outre
un second élément de maintien de douille ayant un second collier avec une seconde de douille positionnée dans le ledit second collier, ledit second élément de maintien de douille étant attaché audit élément tubulaire hydroformé entre ladite première et ladite seconde extrémité dudit bras de commande.

12. Ensemble selon la revendication 11, dans lequel:
ledit second élément de maintien est un élément estampé creux ayant une ouverture formée entre deux brides, et ledit élément tubulaire hydroformé est positionné dans ladite ouverture entre lesdites deux brides.

13. Ensemble selon la revendication 12, dans lequel :
ledit second élément de maintien de douille est attaché audit élément tubulaire hydroformé par une seconde soudure.

14. Procédé pour former un bras de commande (10) pour un véhicule à moteur, comprenant :
la formation d'un élément tubulaire hydroformé par un procédé comprenant :
la fourniture d'une ébauche métallique tubulaire ayant une paroi métallique tubulaire ;
la mise en place de l'ébauche métallique tubulaire dans une cavité de matrice d'un ensemble de matrices, la cavité de matrice ayant des surfaces de matrice, et
la fourniture d'un fluide sous haute pression dans l'intérieur de l'ébauche pour provoquer l'expansion de la paroi métallique de l'ébauche vers l'extérieur jusqu'en conformité avec les surfaces de la cavité de matrice ;
la formation d'un premier élément de maintien de douille, y compris par un procédé comprenant d'estamper un matériau en tôle métallique, le premier élément de maintien de douille incluant une ouverture formant un premier collier ;
la connexion de l'élément tubulaire hydroformé et du premier élément de maintien de douille de telle façon que le premier collier soit espacé de l'élément tubulaire hydroformé de manière à positionner une portion du premier élément de maintien de douille entre l'élément hydroformé et le premier collier ; et
l'insertion d'une douille dans le premier collier.

15. Procédé selon la revendication 14, dans lequel:
l'élément tubulaire hydroformé et le premier élément de maintien de douille sont connectés en introduisant l'élément tubulaire hydroformé d'une manière télescopique à l'intérieur du premier élément de maintien de douille.

16. Procédé selon la revendication 14, dans lequel:
l'élément tubulaire hydroformé et le premier élément de maintien de douille sont connectés par soudure.

17. Procédé selon la revendication 14, comprenant en outre:
la formation d'un second élément de maintien de douille, y compris par un procédé comprenant d'estamper un matériau en tôle métallique ;
l'attachment d'un second collier sur le second élément de maintien de douille ;
l'insertion d'une seconde douille à l'intérieur du second collier;
l'attachement d'un second élément de maintien de douille sur l'élément tubulaire hydroformé à une position entre le premier élément de maintien de douille et une extrémité de l'élément tubulaire hydroformé opposée au premier élément de maintien de douille.

18. Procédé selon la revendication 17, dans lequel :
le second élément de maintien de douille est attaché à l'élément tubulaire hydroformé par soudure.
